# EUROPÄISCHE PATENTSCHRIFT

(11) **EP 4 029 713 B1**
(45) Veröffentlichungstag und Bekanntmachung des Hinweises auf die Patenterteilung: **24.06.2026**
(21) Anmeldenummer: 21152313.9
(22) Anmeldetag: 19.01.2021
(51) Int. Cl.: B60K 15/04

(54) **TANKVERSCHLUSS**
TANK CLOSURE
FERMETURE DU RÉSERVOIR D'ESSENCE

(43) Veröffentlichungstag der Anmeldung: 20.07.2022
(73) Patentinhaber: Blau Holding GmbH, 41516 Grevenbroich (DE)
(72) Erfinder: DEUTSCHMANN, Philipp, 41366 Schwalmtal (DE); MALSKORN, Ralf, 41469 Neuss (DE)
(74) Vertreter: Cohausz & Florack

(56) Entgegenhaltungen:
- EP-A1- 0 080 624
- EP-A1- 3 594 040
- DE-A1- 102004 048 303
- DE-A1- 102010 032 527

## Beschreibung

### Gebiet der Erfindung

Die vorliegende Erfindung betrifft einen Tankverschluss, insbesondere einen Tankverschluss für einen Kraftfahrzeugtank.

### Stand der Technik

Tankverschlüsse werden üblicherweise verwendet, um einen für eine Betankung offenen Tankstutzen eines Tanks außerhalb der Betankungszeiten verschließen zu können. Es sind bereits verschiedene Verriegelungsmechanismen für Tankverschlüsse bekannt. Insbesondere werden schon Mechanismen verwendet, die einen Tankverschlussteil in einem aufgeschraubten Zustand über eine Feder gegen einen anderen Tankverschlussteil verspannen. Bei einem solchen Mechanismus wird keine definierte Rampe/Steigung wie bei Bajonett- oder Schraubverschlüssen benötigt. Der Vorteil dieser Technik ist, dass eine Außendichtung des Tankverschlusses unabhängig von ihrer Temperatur, Steifigkeit und Abnutzungserscheinungen immer gleich stark auf den Tankstutzen gepresst wird.

Allerdings ist das Verhalten solcher Tankverschlüsse mit Federverspannung bei einem Überdruck im Tank nachteilig: der axial bewegliche Tankverschlussteil ist dann nicht, wie bei Verwendung einer Bajonett- oder Schraubgeometrie, gegen ein Abheben vom Tankstutzen bei Überdruck im Tank gesichert. Ab dem Punkt wo der Tankinnendruck höher als die Federkraft ist, wird der axial bewegliche Tankverschlussteil aus seiner Position gedrückt und verliert die Dichtwirkung. Dieser Mechanismus ist daher nicht für Anwendungen von Tanks bei höheren Drücken und insbesondere nicht für Drucktankanwendungen geeignet, weil der bewegliche Tankverschlussteil durch den Mechanismus zwangsweise auch bei Überdruck öffnet.

Aus der DE 10 2004 048 303 A1 ist ein automatischer Tankverschluss für einen Kraftfahrzeugtank bekannt, mit einem eine Betankungsöffnung aufweisenden Gehäuse, mit einem im Gehäuse zwischen einer Schließstellung und einer Öffnungsstellung schwenkbar gelagerten, in Schließrichtung federbelasteten und in der Schließstellung mit einer Dichtung an einer die Betankungsöffnung umfassenden konischen, sich zum Tankinneren hin erweiternden Dichtfläche anliegenden Verschlussklappe und mit einer Einrichtung zur Verriegelung der Verschlussklappe in der Schließstellung, wobei die Verriegelungseinrichtung einen an der Verschlussklappe angeordneten Fortsatz und ein Verriegelungsteil umfasst, wobei der Fortsatz in der Schließstellung der Versschlussklappe aus der Betankungsöffnung mit einem Längsabschnitt hervor steht, der von dem sich am Gehäuse abstützenden Verriegelungsteil in Richtung der Mittellängsachse der Betankungsöffnung axial wirksam hintergriffen ist.

### Zusammenfassung der Erfindung

Es ist eine Aufgabe der Erfindung, einen Tankverschluss anzugeben, bei dem ein axial beweglicher (zweiter) Tankverschlussteil, insbesondere mit einer Dichtung auf dem axial beweglichen Tankverschlussteil, zwar mit konstanter Kraft auf einen anderen, nicht axial beweglichen (ersten) Tankverschlussteil gepresst wird, wobei der Tankverschluss aber auch für größere Drücke und insbesondere für Drucktankanwendungen geeignet sein soll.

Die Lösung der Aufgabe erfolgt durch einen Tankverschluss mit den Merkmalen gemäß Anspruch 1.

Der Tankverschluss umfasst einen ersten Tankverschlussteil und einen zweiten Tankverschlussteil, wobei der zweite Tankverschlussteil über eine Feder in axialer Richtung gegenüber dem ersten Tankverschlussteil flexibel gelagert und gegen den ersten Tankverschlussteil verspannt ist, wobei der erste Tankverschlussteil eine erste Anschlaggeometrie aufweist und der zweite Tankverschlussteil eine zweite Anschlaggeometrie aufweist, wobei in einer Geschlossenstellung des Tankverschlusses die zweite Anschlaggeometrie gegenüber der ersten Anschlaggeometrie einen mechanischen Anschlag bildet, so dass ein axiales Bewegen des zweiten Tankverschlussteils relativ zum ersten Tankverschlussteil gegen die Federkraft der Feder verhindert wird.

Erfindungsgemäß verwendet ein Tankverschluss eine Feder, um einen zweiten Tankverschlussteil gegen einen ersten Tankverschlussteil vorzuspannen. Durch die Federkraft wird der zweite Tankverschlussteil, insbesondere auch eine Dichtung des zweiten Tankverschlussteiles, in der Geschlossenstellung des Tankverschlusses mit konstanter Kraft gegen den ersten Tankverschlussteil gedrückt. Um ein Abheben des zweiten Tankverschlussteiles bei hohem Druck im Tankinneren zu verhindern, wird ein Anschlag zwischen zweitem Tankverschlussteil und erstem Tankverschlussteil eingerichtet, der in der Geschlossenstellung ein Abheben des Zweiter Tankverschlussteiles mechanisch verhindert. Dazu weist der erste Tankverschlussteil eine erste Anschlaggeometrie auf und der zweite Tankverschlussteil eine zweite Anschlaggeometrie, sodass in der Geschlossenstellung die zweite Anschlaggeometrie an der ersten Anschlaggeometrie auf Anschlag liegt und hierdurch ein axiales Abheben des zweiten Tankverschlussteiles vom ersten Tankverschlussteil gegen die Federkraft verhindert wird.

Die Erfindung verwendet daher in einem Mechanismus mit Federvorspannung eines axial beweglichen, zweiten Tankverschlussteiles eine zusätzliche mechanische Verriegelung über einen Anschlag. Die Verriegelung wird bevorzugt erst wirksam, wenn der Verschluss auf den ersten Tankverschlussteil bis in die Endposition aufgeschraubt wird. Die Erfindung verwendet somit eine Geometrie, die den Federmechanismus im verschlossenen Zustand blockiert. Dadurch kann der zweite Tankverschlussteil bei steigendem Tankinnendruck nicht mehr aus der abdichtenden Position gedrückt werden.

Die Erfindung kann die Problematik lösen, dass der zweite Tankverschlussteil bei hohen Tankinnendrücken undicht wird bzw. über ein Überdruckventil verfügt, auch in den Fällen wo kein Überdruckventil gewünscht ist. Außerdem wird durch diese Lösung das Crashverhalten des Tankverschlusses verbessert, da der Verschluss im Crash Fall durch zusammengedrückte Anschlagteile, insbesondere Metallteile, vom Verschlusssockel abgehoben werden kann.

Erfindungsgemäß sind der zweite Tankverschlussteil und der erste Tankverschlussteil dazu ausgebildet, dass der zweiter Tankverschlussteil durch Verdrehung gegenüber dem ersten Tankverschlussteil bis zu einer Endposition in die Geschlossenstellung bringbar ist, wobei vor der Endposition und somit außerhalb der Geschlossenstellung, die zweite Anschlaggeometrie gegenüber der ersten Anschlaggeometrie nicht auf Anschlag liegt.

Der erste Tankverschlussteil umfasst erfindungsgemäß einen drehbaren Tankverschlussbauteil, der mit dem zweiten Tankverschlussteil verdrehbar ist, und einen nichtdrehbaren Tankverschlussbauteil, der bei Verdrehung des zweiten Tankverschlussteiles ortsfest bleibt, also nicht verdreht wird.

Der nichtdrehbare Tankverschlussbauteil ist erfindungsgemäß dazu ausgebildet, an einem Tankstutzen so angebracht zu werden, dass die Position des nichtdrehbaren Tankverschlussbauteils in Umfangsrichtung durch den Tankstutzen festgelegt ist. Der nichtdrehbare Tankverschlussbauteil weist dazu besonders bevorzugt eine nicht rotationssymmetrische Ausformung auf, die in eine entsprechende nicht rotationssymmetrische Gegen-Ausformung des Tankstutzens eingreifen kann, also mit einem Tankstutzen einen nicht rotationssymmetrischen Formschluss bilden kann.

Bevorzugt wird in der Geschlossenstellung eine Dichtung des zweiten Tankverschlussteiles, insbesondere eine Außendichtung, durch die Feder axial gegen den ersten Tankverschlussteil gepresst.

Vorzugsweise wird die zweite Anschlaggeometrie durch zumindest einen Riegel gebildet und die erste Anschlaggeometrie durch zumindest eine Auflagefläche, also Anschlagfläche, für den Riegel gebildet.

Die Auflagefläche der zweiten Anschlaggeometrie ist bevorzugt auf dem nichtdrehbaren, ortsfesten Tankverschlussbauteil ausgebildet.

Vorzugsweise ist auf dem nichtdrehbaren Tankverschlussbauteil eine Rampengeometrie ausgebildet, wobei ein Fortsatz des drehbaren Tankverschlussbauteils in der Geschlossenstellung am Ende der Rampengeometrie liegt, um die Endposition einzunehmen.

Der drehbare Tankverschlussbauteil wird bevorzugt bei Verdrehung des zweiten Tankverschlussteiles über den Riegel des zweiten Tankverschlussteiles mitgenommen, so dass der drehbare Tankverschlussbauteil mit dem zweiten Tankverschlussteil verdreht wird.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht eines erfindungsgemäßen Tankverschlusses in Offenstellung.
- Fig. 2: ist eine dreidimensionale Ansicht des Tankverschlusses gemäß Fig. 1 in Geschlossenstellung.
- Fig. 3: ist eine Schnittansicht des Tankverschlusses gemäß Fig. 1 in Offenstellung.
- Fig. 4: ist eine Schnittansicht des Tankverschlusses gemäß Fig. 3 in Geschlossenstellung.

### Detaillierte Beschreibung der Erfindung

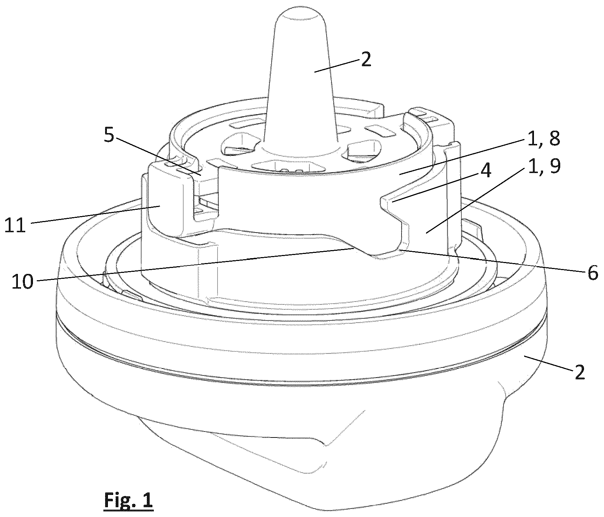

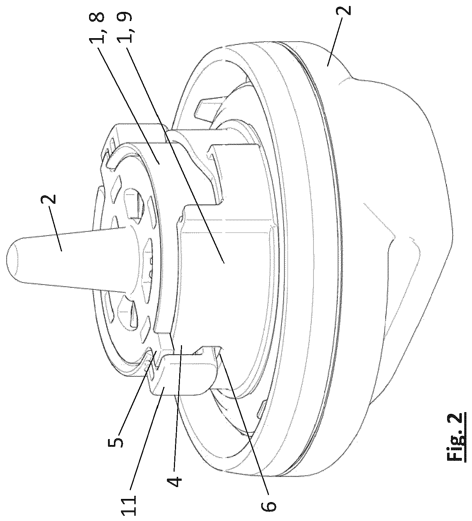

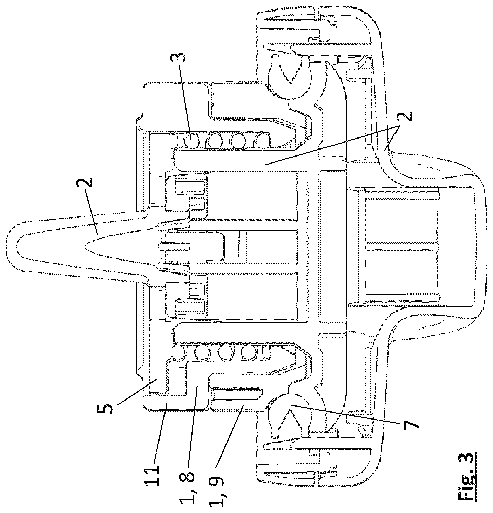

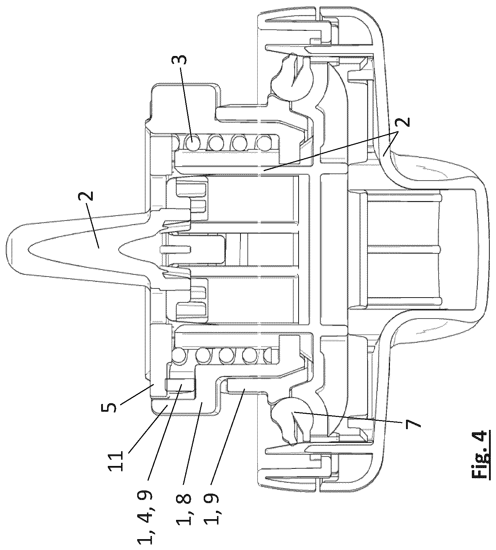

In den Fig. 1-4 ist ein erfindungsgemäßer Tankverschluss dargestellt, wobei sich der Tankverschluss in den Fig. 1 und 3 im geschlossenen, verriegelten Zustand befindet und in den Fig. 2 und 4 in einem nicht geschlossenen, also offenen Zustand befindet.

Der Tankverschluss umfasst einen ersten Tankverschlussteil 1 und einen zweiten Tankverschlussteil 2, wobei der zweite Tankverschlussteil 2 gegenüber dem ersten Tankverschlussteil 1 axial bewegbar ist. Der erste Tankverschlussteil 1 ist auf einen Tankstutzen aufsetzbar, so dass zumindest ein Bauteil des ersten Tankverschlussteils 1 (nichtdrehbarer Tankverschlussteilbauteil 9) am Tankstutzen verdrehgesichert ist, um den Tankstutzen, über Verdrehung des zweiten Tankverschlussteils 2, zu schließen.

Zumindest in der Geschlossenstellung der Fig. 2 und 4 ist der zweite Tankverschlussteil 2 über eine Feder 3 axial gegen den ersten Tankverschlussteil 1 verspannt (siehe Fig. 4).

Der erste Tankverschlussteil 1 umfasst einen drehbaren Tankverschlussbauteil 8, der mit dem zweiten Tankverschlussteil 2 verdrehbar ist und einen nichtdrehbaren Tankverschlussbauteil 9, der bei Verdrehung des zweiten Tankverschlussteiles 2 nicht mitgedreht wird.

Der erste Tankverschlussteil 1 weist eine erste Anschlaggeometrie 4 auf, und der zweite Tankverschlussteil 2 weist eine zweite Anschlaggeometrie 5 auf, wobei in der Geschlossenstellung (Fig. 2, 4) die zweite Anschlaggeometrie 5 gegenüber der ersten Anschlaggeometrie 4 auf Anschlag liegt, so dass ein axiales Abheben des zweiten Tankverschlussteiles 2 vom ersten Tankverschlussteil 1 gegen die Federkraft der Feder 3 verhindert wird, auch bei einem starken Überdruck im Inneren des Tanks (also in den Fig. 1 bis 4 jeweils von oben).

In der Geschlossenstellung wird eine ringförmige Dichtung 7 des zweiten Tankverschlussteiles 2, nämlich eine Außendichtung, durch die Feder 3 axial gegen den ersten Tankverschlussteil 1 und somit gegen einen Tankstutzen gepresst, auf dem der erste Tankverschlussteil 1 sitzt (Fig. 4).

Die zweite Anschlaggeometrie 5 wird durch zumindest einen Riegel gebildet, bevorzugt durch zumindest zwei um 180 Grad zueinander versetzte, also einander gegenüberliegende Riegel, und die erste Anschlaggeometrie 4 wird durch zumindest eine Auflagefläche für den Riegel gebildet, bevorzugt durch zumindest zwei Auflageflächen die jeweils den Riegeln zugeordnet sind, so dass die Auflageflächen ebenfalls um 180 Grad zueinander versetzt, also einander gegenüberliegend angeordnet sind.

Die ersten Anschlaggeometrien 4 sind auf dem nichtdrehbaren Tankverschlussbauteil 9 ausgebildet.

Auf dem nichtdrehbaren Tankverschlussbauteil 9 ist zudem zumindest eine Rampengeometrie 10 ausgebildet, die sich bevorzugt nur über einen kurzen Abschnitt des Umfangs des ersten Tankverschlussteils 1 erstreckt. Ein Fortsatz 11 des drehbaren Tankverschlussbauteils 8 liegt in der Geschlossenstellung am Ende der Rampengeometrie 10, um dort eine Endposition 6 einzunehmen.

Vorzugsweise gibt es gleich viele erste und zweite Anschlaggeometrien 4, 5, Rampengeometrien 10 und Fortsätze 11.

Der zweite Tankverschlussteil 2 kann durch Verdrehung gegenüber dem ersten Tankverschlussteil 1 bis zu seiner Endposition 6 in die Geschlossenstellung gebracht werden. Der zweite Tankverschlussteil 2 weist eine äußere Form auf, die ein manuelles Verdrehen des zweiten Tankverschlussteils 2 erleichtert, insbesondere eine außen liegende Längsrippe. Vor der Endposition 6 und somit außerhalb der Geschlossenstellung des Tankverschlusses, liegt die zweite Anschlaggeometrie 5 nicht auf der ersten Anschlaggeometrie 4 auf, bildet also keinen Anschlag.

Bei Verdrehung des zweiten Tankverschlussteiles 2 wird der drehbare Tankverschlussbauteil 8 über den Riegel des zweiten Tankverschlussteiles 2 mitgenommen, so dass der drehbare Tankverschlussbauteil 8 mit dem zweiten Tankverschlussteil 2 verdreht wird.

### Bezugszeichenliste

- 1: Erster Tankverschlussteil
- 2: Zweiter Tankverschlussteil
- 3: Feder
- 4: erste Anschlaggeometrie
- 5: zweite Anschlaggeometrie
- 6: Endposition
- 7: Dichtung
- 8: drehbares Tankverschlussbauteil
- 9: nichtdrehbares Tankverschlussbauteil
- 10: Rampengeometrie
- 11: Fortsatz

## Patentansprüche

1. Tankverschluss, umfassend einen ersten Tankverschlussteil (1) und einen zweiten Tankverschlussteil (2), wobei der zweite Tankverschlussteil (2) über eine Feder (3) in axialer Richtung gegenüber dem ersten Tankverschlussteil (1) flexibel gelagert und gegen den ersten Tankverschlussteil (1) verspannt ist,
wobei der erste Tankverschlussteil (1) eine erste Anschlaggeometrie (4) aufweist und der zweite Tankverschlussteil (2) eine zweite Anschlaggeometrie (5) aufweist, wobei in einer Geschlossenstellung des Tankverschlusses die zweite Anschlaggeometrie (5) gegenüber der ersten Anschlaggeometrie (4) einen mechanischen Anschlag bildet, so dass ein axiales Bewegen des zweiten Tankverschlussteils (2) relativ zum ersten Tankverschlussteil (1) gegen die Federkraft der Feder (3) verhindert wird,
**dadurch gekennzeichnet , dass** der zweite Tankverschlussteil (2) und der erste Tankverschlussteil (1) dazu ausgebildet sind, dass der zweite Tankverschlussteil (2) durch Verdrehung gegenüber dem ersten Tankverschlussteil (1) bis zu einer Endposition (6) in die Geschlossenstellung bringbar ist, wobei vor der Endposition (6) und somit außerhalb der Geschlossenstellung, die zweite Anschlaggeometrie (5) gegenüber der ersten Anschlaggeometrie (4) keinen Anschlag bildet, wobei der erste Tankverschlussteil (1) einen drehbaren Tankverschlussbauteil (8) umfasst, der mit dem zweiten Tankverschlussteil (2) verdrehbar ist und wobei der erste Tankverschlussteil (1) einen nichtdrehbaren Tankverschlussbauteil (9) umfasst, der bei Verdrehung des zweiten Tankverschlussteiles (2) ortsfest bleibt, wobei der nichtdrehbare Tankverschlussbauteil (9) dazu ausgebildet ist, an einem Tankstutzen so angebracht zu werden, dass die Position des nichtdrehbaren Tankverschlussbauteils (9) in Umfangsrichtung durch den Tankstutzen festgelegt ist.

2. Tankverschluss nach Anspruch 1,
**dadurch gekennzeichnet , dass** in der Geschlossenstellung eine Dichtung (7) des zweiten Tankverschlussteiles (2) durch die Feder (3) axial in Richtung zum ersten Tankverschlussteil (1) hin gepresst wird.

3. Tankverschluss nach zumindest einem der vorhergehenden Ansprüche,
**dadurch gekennzeichnet , dass** die zweite Anschlaggeometrie (5) durch zumindest einen Riegel gebildet wird und die erste Anschlaggeometrie (4) durch zumindest eine Auflagefläche für den Riegel gebildet wird.

4. Tankverschluss nach Anspruch 3,
**dadurch gekennzeichnet , dass** die Auflagefläche der ersten Anschlaggeometrie (4) auf dem nichtdrehbaren Tankverschlussteilbauteil (9) ausgebildet ist.

5. Tankverschluss nach Anspruch 1,
**dadurch gekennzeichnet , dass** auf dem nichtdrehbaren Tankverschlussteilbauteil (9) eine Rampengeometrie (10) ausgebildet ist, wobei ein Fortsatz (11) des drehbaren Tankverschlussteilbauteils (8) in der Geschlossenstellung am Ende der Rampengeometrie (10) liegt, um die Endposition (6) einzunehmen.

6. Tankverschluss nach Anspruch 3,
**dadurch gekennzeichnet , dass** der drehbare Tankverschlussteilbauteil (8) bei Verdrehung des zweiten Tankverschlussteiles (2) über den Riegel des zweiten Tankverschlussteiles (2) mitgenommen wird, so dass der drehbare Tankverschlussteilbauteil (8) mit dem zweiten Tankverschlussteil (2) verdreht wird.

## Claims

1. Fuel tank cap comprising a first fuel tank cap part (1) and a second fuel tank cap part (2), wherein the second fuel tank cap part (2) is flexibly mounted in the axial direction relative to the first fuel tank cap part (1) via a spring (3) and is biased against the first fuel tank cap part (1),
wherein the first fuel tank cap part (1) has a first stop geometry (4) and the second fuel tank cap part (2) has a second stop geometry (5), wherein, in a closed position of the fuel tank cap, the second stop geometry (5) forms a mechanical stop relative to the first stop geometry (4), so that axial movement of the second fuel tank cap part (2) relative to the first fuel tank cap part (1) against the spring force of the spring (3) is prevented,
**characterised in that** the second fuel tank cap part (2) and the first fuel tank cap part (1) are designed such that the second fuel tank cap part (2) can be brought to a closed position until an end position (6) is reached by rotating it relative to the first fuel tank cap part (1), wherein, prior to the end position (6) and thus outside the closed position, the second stop geometry (5) does not form a stop relative to the first stop geometry (4), wherein the first fuel tank cap part (1) comprises a rotatable fuel tank cap component (8) which can be rotated with the second fuel tank cap part (2), and wherein the first fuel tank cap part (1) comprises a non-rotatable fuel tank cap component (9) which remains stationary when the second fuel tank cap part (2) is rotated, wherein the non-rotatable fuel tank cap component (9) is designed to be mounted on a fuel filler neck
such that the position of the non-rotatable fuel tank cap component (9) is defined in the circumferential direction by the fuel filler neck.

2. Fuel tank cap according to claim 1,
**characterised in that**, in the closed position, a seal (7) of the second fuel tank cap part (2) is pressed axially towards the first fuel tank cap part (1) by the spring (3).

3. Fuel tank cap according to at least one of the preceding claims,
**characterised in that** the second stop geometry (5) is formed by at least one latch and the first stop geometry (4) is formed by at least one bearing surface for the latch.

4. Fuel tank cap according to claim 3,
**characterised in that** the bearing surface of the first stop geometry (4) is formed on the non-rotatable fuel tank cap component (9).

5. Fuel tank cap according to claim 1,
**characterised in that** a ramp geometry (10) is formed on the non-rotatable fuel tank cap component (9), wherein an extension (11) of the rotatable fuel tank cap component (8) lies at the end of the ramp geometry (10) in the closed position in order to assume the end position (6).

6. Fuel tank cap according to claim 3,
**characterised in that**, upon rotation of the second fuel tank cap part (2), the rotatable fuel tank cap component (8) is driven by the latch of the second fuel tank cap part (2), so that the rotatable fuel tank cap component (8) is rotated together with the second fuel tank cap part (2).

## Revendications

1. Bouchon de réservoir, comprenant une première partie de bouchon de réservoir (1) et une deuxième partie de bouchon de réservoir (2), la deuxième partie de bouchon de réservoir (2) étant montée de manière flexible dans le sens axial par rapport à la première partie de bouchon de réservoir (1) au moyen d'un ressort (3) et étant précontrainte contre la première partie de bouchon de réservoir (1),
la première partie de bouchon de réservoir (1) présentant une première géométrie de butée (4) et la deuxième partie de bouchon de réservoir (2) présentant une deuxième géométrie de butée (5), la deuxième géométrie de butée (5) forme, dans une position fermée du bouchon de réservoir, une butée mécanique par rapport à la première géométrie de butée (4), de sorte qu'un déplacement axial de la deuxième partie de bouchon de réservoir (2) par rapport à la première partie de bouchon de réservoir (1) contre la force du ressort (3) est empêché,
**caraetérisé** en ce que la deuxième partie de bouchon de réservoir (2) et la première partie de bouchon de réservoir (1) sont conçues de telle sorte que la deuxième partie de bouchon de réservoir (2) peut être amenée, par rotation par rapport à la première partie de bouchon de réservoir (1) jusqu'à une position finale (6) dans la position fermée, la deuxième géométrie de butée (5) ne formant pas de butée par rapport à la première géométrie de butée (4) en amont de la position finale (6) et donc en dehors de la position fermée, la première partie de bouchon de réservoir (1) comprenant un élément de bouchon de réservoir rotatif (8) pouvant tourner avec la deuxième partie de bouchon de réservoir (2) et la première partie de bouchon de réservoir (1) comprenant un élément de bouchon de réservoir non rotatif (9) qui reste fixe lors de la rotation de la deuxième partie de bouchon de réservoir (2), l'élément de bouchon de réservoir non rotatif (9) étant conçu pour être monté sur un goulot de réservoir de telle sorte que la position de l'élément de bouchon de réservoir non rotatif (9) soit déterminée dans le sens circonférentiel par le goulot de réservoir.

2. Bouchon de réservoir selon la revendication 1,
**caractérisé en ce que**, en position fermée, un joint d'étanchéité (7) de la deuxième partie de bouchon de réservoir (2) est pressé axialement par le ressort (3) en direction de la première partie de bouchon de réservoir (1).

3. Bouchon de réservoir selon au moins l'une des revendications précédentes,
**caractérisé en ce que** la deuxième géométrie de butée (5) est formée par au moins un verrou et la première géométrie de butée (4) est formée par au moins une surface d'appui pour le verrou.

4. Bouchon de réservoir selon la revendication 3,
**caractérisé en ce que** la surface d'appui de la première géométrie de butée (4) est formée sur l'élément de bouchon de réservoir non rotatif (9).

5. Bouchon de réservoir selon la revendication 1,
**caractérisé en ce qu'**une géométrie en rampe (10) est formée sur l'élément de bouchon de réservoir non rotatif (9), un prolongement (11) de l'élément de bouchon de réservoir rotatif (8) se trouvant, en position fermée, à l'extrémité de la géométrie en rampe (10) pour prendre la position finale (6).

6. Bouchon de réservoir selon la revendication 3,
**caractérisé en ce que** l'élément de bouchon de réservoir rotatif (8) est entraîné par le verrou de la deuxième partie du bouchon de réservoir (2) lors de la rotation de cette dernière, de sorte que l'élément de bouchon de réservoir rotatif (8) tourne avec la deuxième partie (2) du bouchon de réservoir.
